# EUROPEAN PATENT SPECIFICATION

(11) **EP 2 709 236 B1**
(45) Date of publication and mention of the grant of the patent: **27.07.2016**
(21) Application number: 13798910.9
(22) Date of filing: 27.04.2013
(51) Int. Cl.: H02M 1/42, H02J 7/02, H02M 3/158, H02H 7/06, H02J 9/04, H02J 7/06

(54) **UNINTERRUPTED POWER SUPPLY CIRCUIT AND CONTROL METHOD THEREFOR**
SCHALTUNG FÜR UNUNTERBROCHENE STROMVERSORGUNG UND STEUERVERFAHREN DAFÜR
CIRCUIT D'ALIMENTATION ÉLECTRIQUE ININTERROMPUE ET PROCÉDÉ DE COMMANDE

(30) Priority: 06.06.2012 CN 201210183920
(43) Date of publication of application: 19.03.2014
(73) Proprietor: Huawei Technologies Co., Ltd., Longgang District Shenzhen, Guangdong 518129 (CN)
(72) Inventor: LIU, Peiguo, Shenzhen, Guangdong 518129 (CN); FEI, Zhenfu, Shenzhen, Guangdong 518129 (CN); WANG, Bo, Shenzhen, Guangdong 518129 (CN)
(74) Representative: Körber, Martin Hans
(86) International application number: PCT/CN2013/074879
(87) International publication number: WO 2013/181973

(56) References cited:
- CN-A- 101 685 973
- CN-A- 101 834 461
- CN-A- 102 709 995
- CN-Y- 2 689 566
- US-A- 5 648 895
- US-A1- 2011 260 541

## Description

### TECHNICAL FIELD

The present invention relates to the field of communications, and in particular, to a UPS (Uninterrupted Power Supply, uninterrupted power supply) circuit and a method for controlling the same.

### BACKGROUND

In the field of communications, many network devices are powered by UPS circuits. The UPS circuit converts and outputs the mains supply to a network device. In addition, when the mains supply is down, a battery in the UPS circuit can continue to supply power to the network device for a period of time so that a user can save data in emergency.

The UPS circuit includes a rectifier circuit, a positive Boost (boost) circuit, a negative Boost (boost) circuit, a battery, a first thyristor, a charger, and the like. The rectifier circuit is connected to the positive Boost circuit and the negative Boost circuit. An anode of the battery is connected to the positive Boost circuit by using a first thyristor, and a cathode of the battery is connected to the negative Boost circuit. The charger is connected to the battery. The rectifier circuit receives the mains, converts the mains into a direct current voltage, and outputs the direct current voltage to the positive Boost circuit and negative Boost circuit. The positive Boost circuit and negative Boost circuit perform active power factor correction for the direct current voltage and output the corrected direct current voltage to a network device. The battery may be charged by using the charger.

During the implementation of the present invention, the inventor finds that the prior art has at least the following problems:
The conventional UPS circuit needs to include a charger to charge the battery.
However, the circuit structure of the charger is complex, resulting in a complex UPS circuit structure and low overall circuit efficiency.
US 2011 260 541 A1 discloses an uninterrupted power supply apparatus comprising a rectifying unit outputs a positive half-cycle of voltage potential and a negative half-cycle of voltage potential; a backup battery outputs a backup voltage; a first boost unit receives the positive half-cycle of voltage potential or the backup voltage and outputs a first voltage; a second boost unit receives the negative half-cycle of voltage potential or the backup voltage and outputs a second voltage.

### SUMMARY

To simplify the UPS circuit structure and improve the overall circuit efficiency, embodiments of the present invention provide a UPS circuit and a method for controlling the same. The technical solutions are as follows:
An uninterrupted power supply UPS circuit includes:
   an alternating current input module, a positive Boost boost module, a negative Boost boost module, a battery, a first switch transistor, a second switch transistor, and a first thyristor; where the alternating current input module is configured to convert the mains into a direct current voltage; the positive Boost boost module, connected to the alternating current input module, is configured to boost the direct current voltage output by the alternating current input module in a positive half cycle of the mains; the negative Boost boost module, connected to the alternating current input module, is configured to boost the direct current voltage output by the alternating current input module in a negative half cycle of the mains; and the second switch transistor is configured to select to connect the alternating current input module and the battery to the positive Boost boost module or the negative Boost boost module;
   a collector of the first switch transistor is electrically connected to a cathode of a first diode in the positive Boost boost module and one end of a first output filter capacitor in the positive Boost boost module, and an emitter of the first switch transistor is electrically connected to one end of a second inductor in the negative Boost boost module and a cathode of the battery; and an anode of the first thyristor is electrically connected to the other end of the second inductor in the negative Boost boost module, a cathode of a second diode in the negative Boost boost module, and an emitter of a fourth switch transistor in the negative Boost boost module, and a cathode of the first thyristor is electrically connected to an anode of the battery.

A method for controlling the circuit includes:
in a positive half cycle of the mains, controlling a first switch transistor to be turned on, so that a second inductor in a negative Boost boost module accumulates electric energy; and
controlling the first switch transistor to be turned off, so that the second inductor discharges to charge a battery by using a first thyristor.

An uninterrupted power supply UPS circuit includes:
an alternating current input module, a positive Boost boost module, a negative Boost boost module, a battery, a first switch transistor, a second switch transistor, and a first thyristor; where the alternating current input module is configured to convert the mains into a direct current voltage; the positive Boost boost module, connected to the alternating current input module, is configured to boost the direct current voltage output by the alternating current input module in a positive half cycle of the mains; the negative Boost boost module, connected to the alternating current input module, is configured to boost the direct current voltage output by the alternating current input module in a negative half cycle of the mains; and the second switch transistor is configured to select to connect the alternating current input module and the battery to the positive Boost boost module or the negative Boost boost module;
an emitter of the first switch transistor is electrically connected to an anode of a second diode in the negative Boost boost module and one end of a second output filter capacitor in the negative Boost boost module, and a collector of the first switch transistor is electrically connected to one end of a first inductor in the positive Boost boost module and an anode of the battery; and
an anode of the first thyristor is electrically connected to a cathode of the battery, and a cathode of the first thyristor is electrically connected to the other end of the first inductor in the positive Boost boost module, an anode of a first diode in the positive Boost boost module, and a collector of a third switch transistor in the positive Boost boost module.

A method for controlling the circuit includes:
in a negative half cycle of the mains, controlling a first switch transistor to be turned on, so that a first inductor in a positive Boost boost module stores electric energy; and
controlling the first switch transistor to be turned off, so that the first inductor discharges to charge a battery by using a first thyristor.

In embodiments of the present invention, the UPS circuit includes an alternating current input module, a positive Boost boost module, a negative Boost boost module, a battery, a first switch transistor, a second switch transistor, and a first thyristor. A collector of the first switch transistor is electrically connected to a cathode of a first diode in the positive Boost boost module and one end of a first output filter capacitor, and an emitter of the first switch transistor is electrically connected to one end of a second inductor in the negative Boost boost module; an anode of the first thyristor is electrically connected to the other end of the second inductor in the negative Boost boost module, a cathode of a second diode, and an emitter of a fourth switch transistor; a cathode of a second thyristor is electrically connected to an anode of the battery; in a positive half cycle of the mains, the battery is charged by controlling turn-on and turn-off of the first switch transistor. Alternatively, an emitter of the first switch transistor is electrically connected to an anode of a second diode in the negative Boost boost module and one end of a second output filter capacitor, and a collector of the first switch transistor is electrically connected to one end of a first inductor in the positive Boost boost module; an anode of a second thyristor is electrically connected to a cathode of the battery; a cathode of the first thyristor is electrically connected to the other end of the first inductor in the positive Boost boost module, an anode of a first diode, and a collector of a third switch transistor; and in a negative half cycle of the mains, the battery is charged by controlling turn-on and turn-off of the first switch transistor. Compared with the prior art, such a UPS circuit simplifies the circuit structure and improves the overall circuit efficiency.

### BRIEF DESCRIPTION OF DRAWING(S)

FIG. 1 is a schematic structural diagram of a UPS circuit according to an embodiment of the present invention;
FIG. 2 is a schematic structural diagram of a UPS circuit according to another embodiment of the present invention;
FIG. 3 is a schematic structural diagram of a UPS circuit according to another embodiment of the present invention;
FIG. 4 is a schematic structural diagram of a UPS circuit according to another embodiment of the present invention;
FIG. 5 is a flowchart of a method for controlling a UPS circuit according to another embodiment of the present invention;
FIG. 6 is a schematic structural diagram of a UPS circuit according to another embodiment of the present invention;
FIG. 7 is a schematic structural diagram of a UPS circuit according to another embodiment of the present invention;
FIG. 8 is a schematic structural diagram of a UPS circuit according to another embodiment of the present invention;
FIG. 9 is a schematic structural diagram of a UPS circuit according to another embodiment of the present invention; and
FIG. 10 is a flowchart of a method for controlling a UPS circuit according to another embodiment of the present invention.

### DESCRIPTION OF EMBODIMENT(S)

To make the objectives, technical solutions, and advantages of the present invention more comprehensible, the following further describes the embodiments of the present invention in detail with reference to the accompanying drawings.

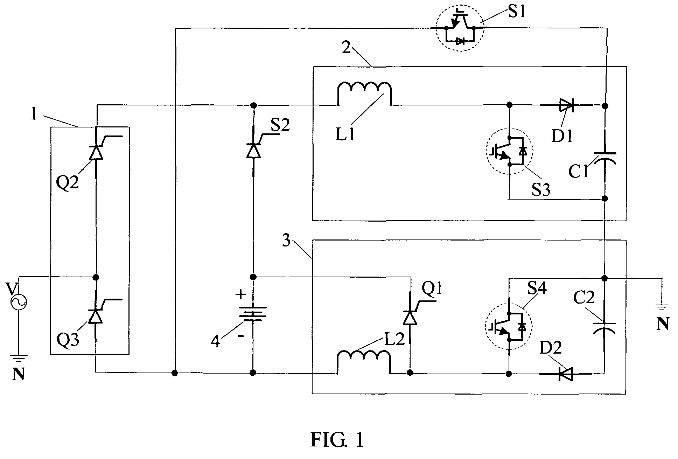

As shown in FIG. 1, an embodiment of the present invention provides a UPS circuit, including:
an alternating current input module 1, a positive Boost boost module 2, a negative Boost boost module 3, a battery 4, a first switch transistor S1, a second switch transistor S2, and a first thyristor Q1.

The alternating current input module 1 is configured to convert the mains into a direct current voltage; the positive Boost boost module 2, connected to the alternating current input module 1, is configured to boost the direct current voltage output by the alternating current input module 1 in a positive half cycle of the mains; the negative Boost boost module 3, connected to the alternating current input module 1, is configured to boost the direct current voltage output by the alternating current input module 1 in a negative half cycle of the mains; and the second switch transistor S2 is configured to select to connect the alternating current input module 1 and the battery 4 to the positive Boost boost module 2 or the negative Boost boost module 3.

A collector of the first switch transistor S1 is electrically connected to a cathode of a first diode D1 in the positive Boost boost module and one end of a first output filter capacitor C1 in the positive Boost boost module 2; and an emitter of the first switch transistor S1 is electrically connected to one end of a second inductor L2 in the negative Boost boost module 3 and a cathode of the battery 4.

An anode of the first thyristor Q1 is electrically connected to the other end of the second inductor L2 in the negative Boost boost module 3, a cathode of a second diode D2 in the negative Boost boost module 3, and an emitter of a fourth switch transistor S4 in the negative Boost boost module 3; and a cathode of the first thyristor Q1 is electrically connected to an anode of the battery 4.

As shown in FIG. 1, the alternating current input module 1 includes a second thyristor Q2 and a third thyristor Q3; the positive Boost boost module 2 includes a first inductor L1, a first diode D1, a third switch transistor S3, and a first output filter capacity C1; and the negative Boost boost module 3 includes a second inductor L2, a second diode D2, a fourth switch transistor S4, and a second output filter capacitor C2.

An anode of the second thyristor Q2 is connected to the live wire of the mains, and a cathode of the second thyristor Q2 is electrically connected to one end of the first inductor L1; the other end of the first inductor L1 is electrically connected to an anode of the first diode D1 and an collector of the third switch transistor S3; a cathode of the first diode D1 is electrically connected to a collector of the first switch transistor S1 and one end of the first output filter capacitor C1; and an emitter of the third switch transistor S3 and the other end of the first output filter capacitor C1 are connected to the null wire of the mains.

A cathode of the third thyristor Q3 is connected to the live wire of the mains, and an anode of the third thyristor Q3 is electrically connected to one end of the second inductor L2; the other end of the second inductor L2 is electrically connected to an anode of the first thyristor Q1, a cathode of the second diode D2, and an emitter of the fourth switch transistor S4; an anode of the second diode D2 is electrically connected to one end of the second output filter capacitor C2; and a collector of the fourth switch transistor S4 and the other end of the second output filter capacitor C2 are connected to the null wire of the mains.

A cathode of the battery 4 is electrically connected to one end of the second inductor L2; an anode of the battery 4 is electrically connected to one end of the second switch transistor S2 and a cathode of the first thyristor Q1; and the other end of the second switch transistor S2 is electrically connected to one end of the first inductor L1.

The above switch transistor may include a power field-effect transistor and an insulated gate bipolar field-effect transistor. Furthermore, the second switch transistor S2 may be a thyristor.

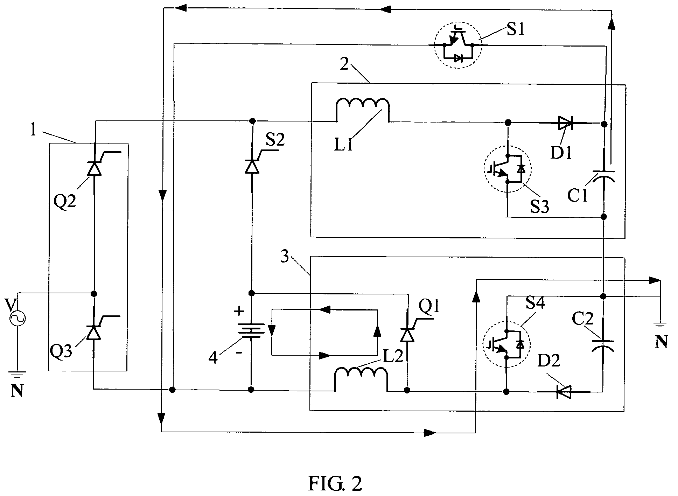

As shown in FIG. 2, the working principle of the UPS circuit shown in FIG. 1 is as follows:

In a positive half cycle of the mains, the first switch transistor S1 is controlled to be turned on, so that a current in the first output filter capacitor C1 in the positive Boost boost module 2 flows into a ground point through the first switch transistor S1, the second inductor L2, and the fourth switch transistor S4, and the second inductor L2 stores electric energy; and, the first switch transistor S1 is controlled to be turned off, so that the second inductor L2 discharges, and a current discharged by the second inductor L2 flows into the battery 4 through the first thyristor Q1, and then flows back to the second inductor L2 from the battery 4, and the battery 4 is charged.

After the first switch transistor S1 is turned off, the second inductor L2 discharges, and the current discharged by the second inductor L2 flows into the battery 4 through the first thyristor Q1 and then flows back to the second inductor L2 from the battery 4. In this case, the current forms a loop, and the battery 4 may be charged. Therefore, in the UPS circuit, the battery may be charged without a charger. In addition, the added first switch transistor S1 and first thyristor Q1 are both electronic components with a simple structure, thereby simplifying the structure of the UPS circuit and improving the overall circuit efficiency.

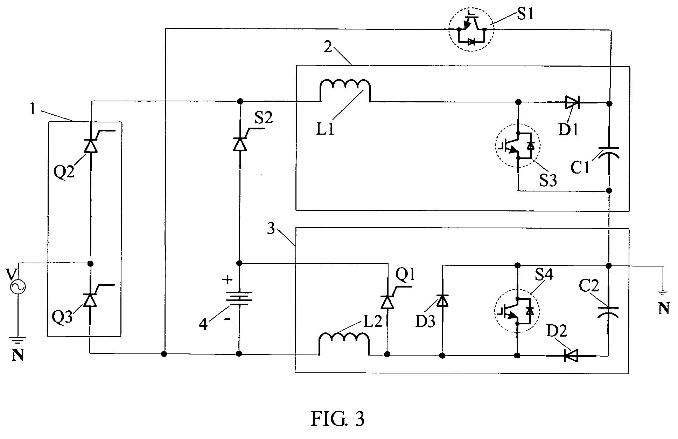

Furthermore, as shown in FIG. 3, the UPS circuit further includes:
a third diode D3, where an anode of the third diode D3 is electrically connected to the other end of the second inductor L2, and a cathode of the third diode D3 is connected to the null wire of the mains.

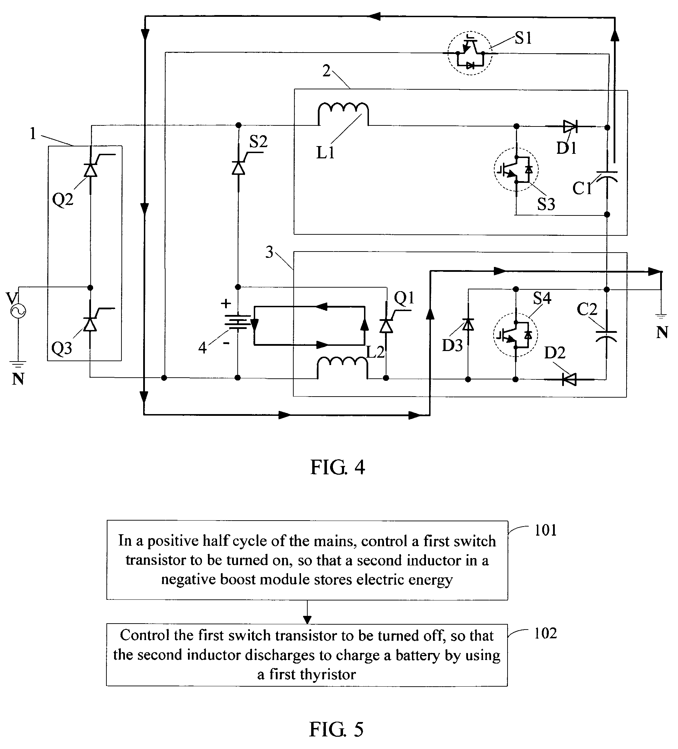

As shown in FIG. 4, the working principle of the UPS circuit shown in FIG. 3 is as follows:

In a positive half cycle of the mains, the first switch transistor S1 is controlled to be turned on, so that a current in the first output filter capacitor C1 in the positive Boost boost module 2 flows into a ground point through the first switch transistor S1, the second inductor L2, and the third switch transistor D3, and the second inductor L2 stores electric energy; and, the first switch transistor S1 is controlled to be turned off, so that the second inductor L2 discharges, and a current discharged by the second inductor L2 flows into the battery 4 through the first thyristor Q1, and then flows back to the second inductor L2 from the battery 4, and the battery 4 is charged.

In the positive half cycle of the mains, the second thyristor Q2 is conducted, the third thyristor Q3 is turned off, and the second thyristor Q2 receives a current input by the mains and outputs the current to the first inductor L1. Part of the current flows into the null wire of the mains through the first inductor L1 and the third switch transistor S3, and the other part of the current flows into the null wire of the mains through the first inductor L1, the first diode D1, and the first output filter capacitor C1. In this case, the first output filter capacitor C1 is charged for implementing active power factor correction.

In the negative half cycle included in the cycle corresponding to the mains, the third thyristor Q3 is conducted, the second thyristor Q2 is turned off, part of a current from the null wire of the mains flows into the live wire of the mains through the fourth switch transistor S4, the second inductor L2, and the third thyristor Q3, and the other part of the current from the null wire of the mains flows into the live wire of the mains through the second output filter capacitor C2, the second diode D2, the second inductor L2, and the third thyristor Q3. In this case, the second output filter capacitor C2 is charged for implementing active power factor correction.

According to the embodiment of the present invention, in the positive half cycle of the mains, the first switch transistor is controlled to be turned on or turned off. When the first switch transistor is turned on, a current in the first output filter capacitor flows into the null wire of the mains through the first switch transistor, the second inductor, and the third switch transistor, and the second inductor stores electric energy; when the first switch transistor is turned off, the second inductor discharges to charge the battery by using the first thyristor. In such a UPS circuit, a charger may be not included, thereby simplifying the structure of the UPS circuit and improving the overall circuit efficiency compared with the prior art. In addition, the cost of the first switch transistor and the first thyristor added in this embodiment is far less than the cost of the charger, thereby reducing the cost of the UPS circuit.

An embodiment of the present invention provides a method for controlling a UPS circuit, and the method may control the UPS circuit shown in FIG. 1 or FIG. 3. As shown in FIG. 5, the method includes the following:
Step 101: In a positive half cycle of the mains, control a first switch transistor to be turned on, so that a second inductor in a negative Boost boost module stores electric energy.
Step 102: Control the first switch transistor to be turned off, so that the second inductor discharges to charge a battery by using a first thyristor.

With respect to the UPS circuit shown in FIG. 1, step 101 may be specifically as follows:
controlling the first switch transistor to be turned on, so that a current in a first output filter in a positive Boost boost circuit flows into the null wire of the mains through the first switch transistor, the second inductor in the negative Boost boost module, and a fourth switch transistor in the negative Boost boost module, and the second inductor stores electric energy; or
with respect to the UPS circuit shown in FIG. 3, step 101 may be specifically as follows:
   controlling the first switch transistor to be turned on, so that a current in a first output filter in a positive Boost circuit flows into the null wire of the mains through the first switch transistor, the second inductor in the negative Boost boost module, and a third diode, and the second inductor stores electric energy.

The method further includes:
in a negative half cycle of the mains, controlling the first switch transistor to be turned off.

According to the embodiment of the present invention, in the positive half cycle of the mains, the first switch transistor is controlled to be turned on. When the first switch transistor is turned on, a current in the first output filter capacitor flows into the null wire of the mains through the first switch transistor, the second inductor, and the third switch transistor, and the second inductor stores electric energy; when the first switch transistor is turned off, the second inductor discharges to charge the battery by using the first thyristor. In such a UPS circuit, a charger may be not included. Compared with the prior art, the structure of the UPS circuit is simplified and the overall circuit efficiency is improved.

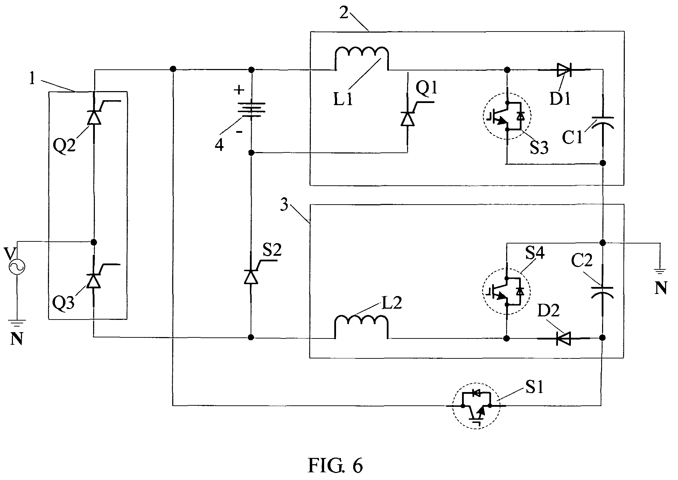

As shown in FIG. 6, an embodiment of the present invention provides a UPS circuit, including:
an alternating current input module 1, a positive Boost boost module 2, a negative Boost boost module 3, a battery 4, a first switch transistor S1, a second switch transistor S2, and a first thyristor Q1.

The alternating current input module 1 is configured to convert the mains into a direct current voltage; the positive Boost boost module 2, connected to the alternating current input module 1, is configured to boost the direct current voltage output by the alternating current input module 1 in a positive half cycle of the mains; the negative Boost boost module 3, connected to the alternating current input module 1, is configured to boost the direct current voltage output by the alternating current input module 1 in a negative half cycle of the mains; and the second switch transistor S2 is configured to select to connect the alternating current input module 1 and the battery 4 to the positive Boost boost module 1 or the negative Boost boost module 3.

An emitter of the first switch transistor S1 is electrically connected to an anode of a second diode D2 in the negative Boost boost module 3 and one end of a second output filter capacitor C2 in the negative Boost boost module 3, and a collector of the first switch transistor S1 is electrically connected to one end of a first inductor L1 in the positive Boost boost module 2 and an anode of the battery 4.

An anode of the first thyristor Q1 is electrically connected to a cathode of the battery 4, and a cathode of the first thyristor Q1 is electrically connected to the other end of the first inductor L1 in the positive Boost boost module 2, an anode of a first diode D2 in the positive Boost boost module 2, and a collector of a third switch transistor S3 in the positive Boost boost module 2.

As shown in FIG. 6, the alternating current input module 1 includes a second thyristor Q2 and a third thyristor Q3, the positive Boost boost module includes a first inductor L1, a first diode D1, a third switch transistor S3, and a first output filter capacity C1, and the negative Boost boost module 3 includes a second inductor L2, a second diode D2, a fourth switch transistor S4, and a second output filter capacitor C2.

An anode of the second thyristor Q2 is connected to the live wire of the mains, and a cathode of the second thyristor Q2 is electrically connected to one end of the first inductor L1; the other end of the first inductor L1 is electrically connected to an anode of the first diode D1, a cathode of the first thyristor Q1, and an collector of the third switch transistor S3; a cathode of the first diode D1 is electrically connected to a collector of the first switch transistor S1 and one end of the first output filter capacitor C1; and an emitter of the third switch transistor S3 and the other end of the first output filter capacitor C1 are connected to the null wire of the mains.

A cathode of the third thyristor Q3 is connected to the live wire of the mains, and an anode of the third thyristor Q3 is electrically connected to one end of the second inductor L2; the other end of the second inductor L2 is electrically connected to a cathode of the second thyristor D2 and an emitter of the fourth switch transistor S4; an anode of the second diode D2 is electrically connected to one end of the second output filter capacitor C2; and a collector of the fourth switch transistor S4 and the other end of the second output filter capacitor C2 are connected to the null wire of the mains.

An anode of the battery 4 is electrically connected to one end of the first inductor L1, a cathode of the battery 4 is electrically connected to one end of the second switch transistor S2 and an anode of the first thyristor Q1, and the other end of the second switch transistor S2 is electrically connected to one end of the second inductor L2.

The above switch transistor may include a power field-effect transistor and an insulated gate bipolar field-effect transistor. Furthermore, the second switch transistor S2 may be a thyristor.

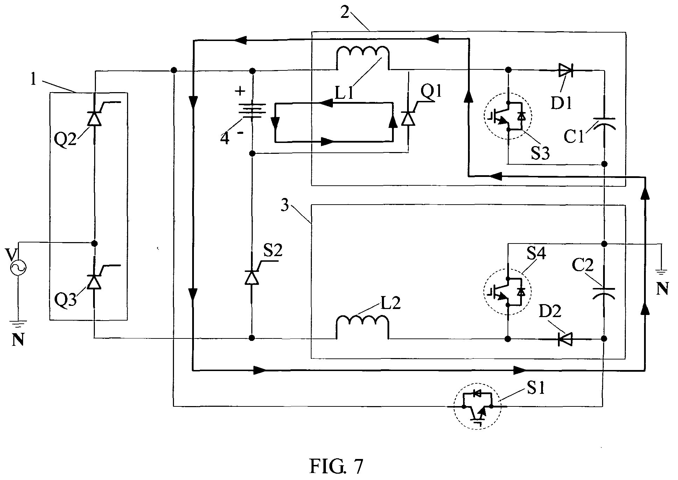

As shown in FIG. 7, the working principle of the UPS circuit shown in FIG. 6 is as follows:

In the negative half cycle of the mains, the first switch transistor S1 is controlled to be turned on, so that a current in the null wire of the mains flows back to the null wire of the mains through the third switch transistor S3 and the first inductor L1 in the positive Boost circuit 2, the first switch transistor S1, and the second output filter capacitor C2 in the negative Boost circuit 3, and the first inductor L1 stores electric energy; and, the first switch transistor S1 is controlled to be turned off, so that the first inductor L1 discharges, and a current discharged by the first inductor L1 flows back to the first inductor L1 through the battery 4 and the first thyristor Q1, and the battery 4 is charged.

After the first switch transistor S1 is turned off, the first inductor L1 discharges, and a current discharged by the first inductor L1 flows back to the second inductor L2 through battery 4 and the first thyristor Q1. In this case, the current forms a loop, and the battery 4 may be charged. Therefore, in the UPS circuit, the battery may be charged without a charger. In addition, the added first switch transistor S1 and first thyristor Q1 are both electronic components with a simple structure, thereby simplifying the structure of the UPS circuit and improving the overall circuit efficiency.

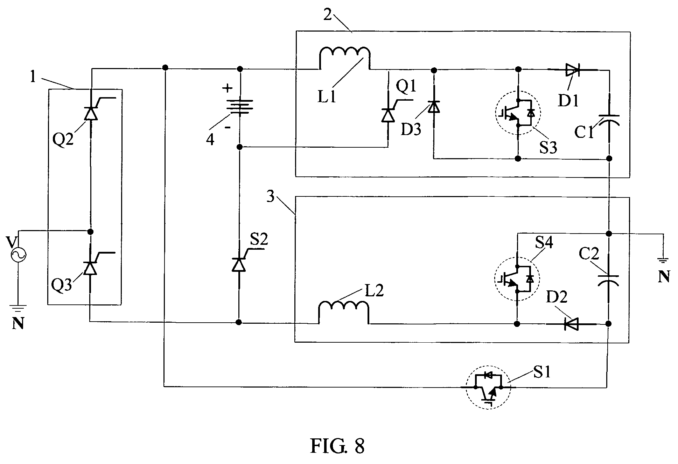

Furthermore, as shown in FIG. 8, the UPS circuit further includes:
a third diode D3, where a cathode of the third diode D3 is electrically connected to the other end of the first inductor L1, and an anode of the third diode D3 is connected to the null wire of the mains.

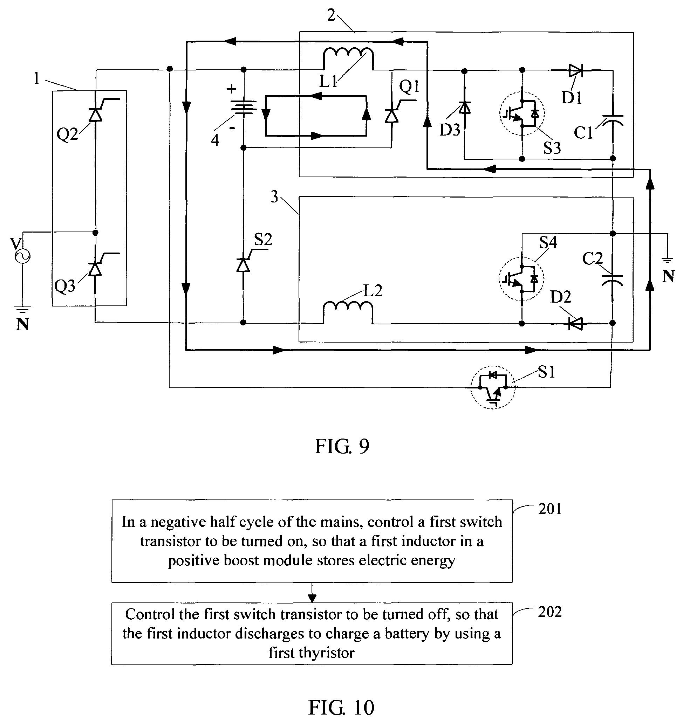

As shown in FIG. 9, the working principle of the UPS circuit shown in FIG. 8 is as follows:

In the negative half cycle of the mains, the first switch transistor S1 is controlled to be turned on, so that a current in the null wire of the mains flows back to the null wire of the mains through the third diode D3, the first inductor L1 in the positive Boost circuit 2, the first switch transistor S1, and the second output filter capacitor C2 in the negative Boost circuit 3, and the first inductor L1 stores electric energy; and, the first switch transistor S1 is controlled to be turned off, so that the first inductor L1 discharges, and a current discharged by the first inductor L1 flows back to the first inductor L1 through the battery 4 and the first thyristor Q1, and the battery 4 is charged.

In the positive half cycle of the mains, the second thyristor Q2 is conducted, the third thyristor Q3 is turned off, and the second thyristor Q2 receives a current input by the mains and outputs the current to the first inductor L1. Part of the current flows into the null wire of the mains through the first inductor L1 and the third switch transistor S3, and the other part of the current flows into the null wire of the mains through the first inductor L1, the first diode D1, and the first output filter capacitor C1. In this case, the first output filter capacitor C1 is charged for implementing active power factor correction.

In the negative half cycle included in the cycle corresponding to the mains, the third thyristor Q3 is conducted, the second thyristor Q2 is turned off, part of a current from the null wire of the mains flows into the live wire of the mains through the fourth switch transistor S4, the second inductor L2, and the third thyristor Q3, and the other part of the current from the null wire of the mains flows into the live wire of the mains through the second output filter capacitor C2, the second diode D2, the second inductor L2, and the third thyristor Q3. In this case, the second output filter capacitor C2 is charged for implementing active power factor correction.

According to the embodiment of the present invention, in the negative half cycle of the mains, the first switch transistor is controlled to be turned on or turned off. When the first switch transistor is turned on, a current in the null wire of the mains flows back to the null wires of the mains through the second switch transistor, the first inductor, the first switch transistor module, and the second output filter capacitor, and the first inductor stores electric energy; when the first switch transistor is turned off, the first inductor discharges to charge the battery by using the first thyristor. In such a UPS circuit, a charger may be not included, thereby simplifying the structure of the UPS circuit and improving the overall circuit efficiency compared with the prior art. In addition, the cost of the first switch transistor and the first thyristor added in this embodiment is far less than the cost of the charger, thereby reducing the cost of the UPS circuit.

An embodiment of the present invention provides a method for controlling a UPS circuit, and the method may control the UPS circuit shown in FIG. 6 or FIG. 8. As shown in FIG. 10, the method includes the following:
Step 201: Control a first switch transistor in a negative half cycle of the mains to be turned on, so that a first inductor in a positive Boost boost module stores electric energy.
Step 202: Control the first switch transistor to be turned off, so that the first inductor discharges to charge a battery by using a first thyristor.

With respect to the UPS circuit shown in FIG. 6, step 201 may be specifically as follows:
controlling the first switch transistor to be turned on, so that a current in the null wire of the mains flows into the null wire of the mains through a third switch transistor in the positive Boost boost module, the first inductor in the positive Boost boost module, the first switch transistor, and a second output filter capacitor in a negative Boost boost module, and the first inductor stores electric energy; or
with respect to the UPS circuit shown in FIG. 8, step 201 may be specifically as follows:
   controlling the first switch transistor to be turned on, so that a current in the null wire of the mains flows into the null wire of the mains through a third diode, the first inductor in the positive Boost boost module, the first switch transistor, and a second output filter capacitor in a negative Boost boost module, and the first inductor stores electric energy.

The method further includes:
in a positive half cycle of the mains, controlling the first switch transistor to be turned off.

According to the embodiment of the present invention, in the negative half cycle of the mains, the first switch transistor is controlled to be turned on, a current in the null wire of the mains flows back to the null wire of the mains through the second switch transistor, the first inductor, the first switch transistor module, and the second output filter capacitor, and the first inductor stores electric energy; when the first switch transistor is turned off, the first inductor discharges to charge the battery by using the first thyristor. In such a UPS circuit, a charger may be not included. Compared with the prior art, the structure of the UPS circuit is simplified and the overall circuit efficiency is improved.

The foregoing description is merely about exemplary embodiments of the present invention, but is not intended to limit the present invention.

## Claims

1. An uninterrupted power supply UPS circuit, comprising:
an alternating current input module (1), a positive Boost boost module (2), a negative Boost boost module (3), a battery (4), a first switch transistor (S1), a second switch transistor (S2), and a first thyristor (Q1); wherein the alternating current input module (1) is configured to convert the mains into a direct current voltage; the positive Boost boost module (2), connected to the alternating current input module (1), is configured to boost the direct current voltage output by the alternating current input module (1) in a positive half cycle of the mains; the negative Boost boost module (3), connected to the alternating current input module (1), is configured to boost the direct current voltage output by the alternating current input module in a negative half cycle of the mains; and the second switch transistor (S2) is configured to select to connect the alternating current input module (1) and the battery (4) to the positive Boost boost module (2) or the negative Boost boost module (3); **characterized in that**
a collector of the first switch transistor (S1) is electrically connected to a cathode of a first diode (D1) in the positive Boost boost module (2) and one end of a first output filter capacitor (C1) in the positive Boost boost module (2), and an emitter of the first switch transistor (S1) is electrically connected to one end of a second inductor (L2) in the negative Boost boost module (3) and a cathode of the battery (4); and
an anode of the first thyristor (Q1) is electrically connected to the other end of the second inductor (L2) in the negative Boost boost module (3), a cathode of a second diode (D2) in the negative Boost boost module (3), and an emitter of a fourth switch transistor (S4) in the negative Boost boost module (3), and a cathode of the first thyristor (Q1) is electrically connected to an anode of the battery (4).

2. The circuit according to claim 1, further comprising:
a third diode, wherein an anode of the third diode is electrically connected to the other end of the second inductor, and a cathode of the third diode is connected to a null wire of the mains.

3. The circuit according to claim 1 or 2, wherein:
at least one of the first switch transistor, the second switch transistor and the fourth switch transistor comprises a power field-effect transistor and an insulated gate bipolar field-effect transistor.

4. A method for controlling the circuit according to any one of claims 1-3, comprising:
in a positive half cycle of the mains, controlling a first switch transistor to be turned on, so that a second inductor in the negative Boost boost module stores electric energy; and
controlling the first switch transistor to be turned off, so that the second inductor discharges to charge a battery by using a first thyristor.

5. The method according to claim 4, wherein the controlling a first switch transistor to be turned on, so that a second inductor in a negative Boost boost module stores electric energy, comprises:
controlling the first switch transistor to be turned on, so that a current in a first output filter in a positive Boost boost circuit flows into a null wire of the mains through the first switch transistor, the second inductor in the negative Boost boost module, and a fourth switch transistor in the negative Boost boost module, and the second inductor stores electric energy; or
controlling the first switch transistor to be turned on, so that a current in a first output filter in a positive Boost circuit flows into a null wire of the mains through the first switch transistor, the second inductor in the negative Boost boost module, and a third diode, and the second inductor stores electric energy.

6. The method according to claim 4 or 5, further comprising:
in a negative half cycle of the mains, controlling the first switch transistor to be turned off.

7. An uninterrupted power supply UPS circuit, comprising:
an alternating current input module, a positive Boost boost module, a negative Boost boost module, a battery, a first switch transistor, a second switch transistor, and a first thyristor; wherein the alternating current input module is configured to convert the mains into a direct current voltage; the positive Boost boost module, connected to the alternating current input module, is configured to boost the direct current voltage output by the alternating current input module in a positive half cycle of the mains; the negative Boost boost module, connected to the alternating current input module, is configured to boost the direct current voltage output by the alternating current input module in a negative half cycle of the mains; and the second switch transistor is configured to select to connect the alternating current input module and the battery to the positive Boost boost module or the negative Boost boost module; **characterized in that**
an emitter of the first switch transistor is electrically connected to an anode of a second diode in the negative Boost boost module and one end of a second output filter capacitor in the negative Boost boost module, and a collector of the first switch transistor is electrically connected to one end of a first inductor in the positive Boost boost module and an anode of the battery; and
an anode of the first thyristor is electrically connected to a cathode of the battery, and a cathode of the first thyristor is electrically connected to the other end of the first inductor in the positive Boost boost module, an anode of a first diode in the positive Boost boost module, and a collector of a third switch transistor in the positive Boost boost module.

8. The circuit according to claim 7, further comprising:
a third diode, wherein a cathode of the third diode is electrically connected to the other end of the first inductor, and an anode of the third diode is connected to a null wire of the mains.

9. The circuit according to claim 7 or 8, wherein:
at least one of the first switch transistor, the second switch transistor and the fourth switch transistor comprises a power field-effect transistor and an insulated gate bipolar field-effect transistor.

10. A method for controlling the circuit according to any one of claims 7-9, comprising:
in a negative half cycle of the mains, controlling a first switch transistor to be turned on, so that a first inductor in a positive Boost boost module stores electric energy; and
controlling the first switch transistor to be turned off, so that the first inductor discharges to charge a battery by using a first thyristor.

11. The method according to claim 10, wherein the controlling a first switch transistor to be turned on, so that a first inductor in a positive Boost boost module stores electric energy, comprises:
controlling the first switch transistor to be turned on, so that a current in a null wire of the mains flows into the null wire of the mains through a third switch transistor in the positive Boost boost module, the first inductor in the positive Boost boost module, the first switch transistor, and a second output filter capacitor in a negative Boost boost module, and the first inductor stores electric energy; or
controlling the first switch transistor to be turned on, so that a current in a null wire of the mains flows into the null wire of the mains through a third diode, the first inductor in the positive Boost boost module, the first switch transistor, and a second output filter capacitor in a negative Boost boost module, and the first inductor stores electric energy.

12. The method according to claim 10 or 11, further comprising:
in a positive half cycle of the mains, controlling the first switch transistor to be turned off.

## Patentansprüche

1. Unterbrechungsfreie Stromversorgungsschaltung, UPS-Schaltung, die Folgendes umfasst:
ein Wechselstromeingangsmodul (1), ein positives "Boost-Boost"-Modul (2), ein negatives "Boost-Boost"-Modul (3), eine Batterie (4), einen ersten Schalttransistor (S1), einen zweiten Schalttransistor (S2), einen ersten Thyristor (Q1); wobei das Wechselstromeingangsmodul (1) konfiguriert ist, die Netzspannung in eine Gleichspannung umzusetzen; das positive "Boost-Boost"-Modul (2), das mit dem Wechselstromeingangsmodul (1) verbunden ist, konfiguriert ist, die Gleichspannung, die durch das Wechselstromeingangsmodul (1) in einer positiven Halbperiode der Netzspannung ausgegeben wird, zu erhöhen; das negative "Boost-Boost"-Modul (3), das mit dem Wechselstromeingangsmodul (1) verbunden ist, konfiguriert ist, die Gleichspannung, die durch das Wechselstromeingangsmodul (1) in einer negativen Halbperiode der Netzspannung ausgegeben wird, zu erhöhen; und der zweite Schalttransistor (S2) konfiguriert ist, auszuwählen, das Wechselstromeingangsmodul (1) und die Batterie (4) mit dem positiven "Boost-Boost"-Modul (2) oder dem negativen "Boost-Boost"-Modul (3) zu verbinden; **dadurch gekennzeichnet, dass** ein Kollektor des ersten Schalttransistors (S1) mit einer Kathode einer ersten Diode (D1) in dem positiven "Boost-Boost"-Modul (2) und einem Ende eines ersten Ausgangsfilterkondensators (C1) in dem positiven "Boost-Boost"-Modul (2) elektrisch verbunden ist; und ein Emitter des ersten Schalttransistors (S1) mit einem Ende eines zweiten Induktors (L2) in dem negativen "Boost-Boost"-Modul (3) und einer Kathode der Batterie (4) elektrisch verbunden ist; und
eine Anode des ersten Thyristors (Q1) mit dem anderen Ende des zweiten Induktors (L2) in dem negativen "Boost-Boost"-Modul (3), einer Kathode der zweiten Diode (D2) in dem negativen "Boost-Boost"-Modul (3) und einem Emitter eines vierten Schalttransistors (S4) in dem negativen "Boost-Boost"-Modul (3) elektrisch verbunden ist, und eine Kathode des ersten Thyristors (Q1) mit einer Anode der Batterie (4) elektrisch verbunden ist.

2. Schaltung nach Anspruch 1, die ferner Folgendes umfasst:
eine dritte Diode, wobei eine Anode der dritten Diode mit dem anderen Ende des zweiten Induktors elektrisch verbunden ist und eine Kathode der dritten Diode mit einem Nullleiter des Stromnetzes verbunden ist.

3. Schaltung nach Anspruch 1 oder 2, wobei:
der erste Schalttransistor und/oder der zweite Schalttransistor und/oder der vierte Schalttransistor einen Leistungs-Feldeffekttransistor und einen Bipolar-Feldeffekttransistor mit isoliertem Gate umfasst.

4. Verfahren zum Steuern der Schaltung nach einem der Ansprüche 1-3, das Folgendes umfasst:
in einer positiven Halbperiode der Netzspannung Steuern eines ersten Schalttransistors, so dass er angeschaltet wird, so dass ein zweiter Induktor in dem negativen "Boost-Boost"-Modul elektrische Energie speichert; und
Steuern des ersten Schalttransistors, so dass er abgeschaltet wird, so dass der zweite Induktor entlädt, um eine Batterie durch Verwenden eines ersten Thyristors zu laden.

5. Verfahren nach Anspruch 4, wobei das Steuern eines ersten Schalttransistors, so dass er angeschaltet wird, so dass ein zweiter Induktor in einem negativen "Boost-Boost"-Modul elektrische Energie speichert, Folgendes umfasst:
Steuern des ersten Schalttransistors, so dass er angeschaltet wird, so dass ein Strom in einem ersten Ausgangsfilter in einer positiven "Boost-Boost"-Schaltung durch den ersten Schalttransistor, den zweiten Induktor in dem negativen "Boost-Boost"-Modul und einen vierten Schalttransistor in dem negativen "Boost-Boost"-Modul in einen Nullleiter des Stromnetzes fließt, und der zweite Induktor elektrische Energie speichert; oder
Steuern des ersten Schalttransistors, so dass er angeschaltet wird, so dass ein Strom in einem ersten Ausgangsfilter in einer positiven Boost-Schaltung durch den ersten Schalttransistor, den zweiten Induktor in dem negativen "Boost-Boost"-Modul und eine dritte Diode in einen Nullleiter des Stromnetzes fließt, und der zweite Induktor elektrische Energie speichert.

6. Verfahren nach Anspruch 4 oder 5, das ferner Folgendes umfasst:
in einer negativen Halbperiode der Netzspannung Steuern des ersten Schalttransistors, so dass er abgeschaltet wird.

7. Unterbrechungsfreie Stromversorgungsschaltung, UPS-Schaltung, die Folgendes umfasst:
ein Wechselstromeingangsmodul, ein positives "Boost-Boost"-Modul, ein negatives "Boost-Boost"-Modul, eine Batterie, einen ersten Schalttransistor, einen zweiten Schalttransistor und einen ersten Thyristor; wobei das Wechselstromeingangsmodul konfiguriert ist, die Netzspannung in eine Gleichspannung umzusetzen; das positive "Boost-Boost"-Modul, das mit dem Wechselstromeingangsmodul verbunden ist, konfiguriert ist, die Gleichspannung, die durch das Wechselstromeingangsmodul ausgegeben wird, in einer positiven Halbperiode der Netzspannung zu erhöhen; das negative "Boost-Boost"-Modul, das mit dem Wechselstromeingangsmodul verbunden ist, konfiguriert ist, die Gleichspannung, die durch das Wechselstromeingangsmodul ausgegeben wird, in einer negativen Halbperiode der Netzspannung zu erhöhen; und der zweite Schalttransistor konfiguriert ist, auszuwählen, das Wechselstromeingangsmodul und die Batterie mit dem positiven "Boost-Boost"-Modul oder dem negativen "Boost-Boost"-Modul zu verbinden;
**dadurch gekennzeichnet, dass**
ein Emitter des ersten Schalttransistors mit einer Anode einer zweiten Diode in dem negativen "Boost-Boost"-Modul und einem Ende eines zweiten Ausgangsfilterkondensators in dem negativen "Boost-Boost"-Modul elektrisch verbunden ist, und ein Kollektor des ersten Schalttransistors mit einem Ende eines ersten Induktors in dem positiven "Boost-Boost"-Modul und einer Anode der Batterie elektrisch verbunden ist; und
eine Anode des ersten Thyristors mit einer Kathode der Batterie elektrisch verbunden ist, und eine Kathode des ersten Thyristors mit dem anderen Ende des ersten Induktors in dem positiven "Boost-Boost"-Modul, einer Anode einer ersten Diode in dem positiven "Boost-Boost"-Modul und einem Kollektor eines dritten Schalttransistors in dem positiven "Boost-Boost"-Modul elektrisch verbunden ist.

8. Schaltung nach Anspruch 7, die ferner Folgendes umfasst:
eine dritte Diode, wobei eine Kathode der dritten Diode mit dem anderen Ende des ersten Induktors elektrisch verbunden ist und eine Anode der dritten Diode mit einem Nullleiter des Stromnetzes verbunden ist.

9. Schaltung nach Anspruch 7 oder 8, wobei:
der erste Schalttransistor und/oder der zweite Schalttransistor und/oder der vierte Schalttransistor einen Leistungs-Feldeffekttransistor und einen Bipolar-Feldeffekttransistor mit isoliertem Gate umfasst.

10. Verfahren zum Steuern der Schaltung nach einem der Ansprüche 7-9, das Folgendes umfasst:
in einer negativen Halbperiode der Netzspannung Steuern eines ersten Schalttransistors, so dass er angeschaltet wird, so dass ein erster Induktor in einem positiven "Boost-Boost"-Modul elektrische Energie speichert; und
Steuern des ersten Schalttransistors, so dass er abgeschaltet wird, so dass der erste Induktor entlädt, um eine Batterie durch Verwenden eines ersten Thyristors zu laden.

11. Verfahren nach Anspruch 10, wobei das Steuern eines ersten Schalttransistors, so dass er angeschaltet wird, so dass ein erster Induktor in einem positiven "Boost-Boost"-Modul elektrische Energie speichert, Folgendes umfasst:
Steuern des ersten Schalttransistors, so dass er angeschaltet wird, so dass ein Strom in einem Nullleiter des Stromnetzes durch einen dritten Schalttransistor in dem positiven "Boost-Boost"-Modul, den ersten Induktor in dem positiven "Boost-Boost"-Modul, den ersten Schalttransistor und einen zweiten Ausgangsfilterkondensator in einem negativen "Boost-Boost"-Modul in den Nullleiter des Stromnetzes fließt, und der erste Induktor elektrische Energie speichert; oder
Steuern des ersten Schalttransistors, so dass er angeschaltet wird, so dass ein Strom in einem Nullleiter des Stromnetzes durch eine dritte Diode, den ersten Induktor in dem positiven "Boost-Boost"-Modul, den ersten Schalttransistor und einen zweiten Ausgangsfilterkondensator in einem negativen "Boost-Boost"-Modul in den Nullleiter des Stromnetzes fließt, und der erste Induktor elektrische Energie speichert.

12. Verfahren nach Anspruch 10 oder 11, das ferner Folgendes umfasst:
in einer positiven Halbperiode der Netzspannung Steuern des ersten Schalttransistors, so dass er abgeschaltet wird.

## Revendications

1. Circuit d'alimentation sans coupure UPS, comprenant :
un module d'entrée de courant alternatif (1), un module d'amplification Boost positif (2), un module d'amplification Boost négatif (3), une batterie (4), un premier transistor de commutation (S1), un deuxième transistor de commutation (S2), et un premier thyristor (Q1) ; le module d'entrée de courant alternatif (1) étant configuré pour transformer le secteur en une tension en courant continu ; le module d'amplification Boost positif (2), relié au module d'entrée de courant alternatif (1), étant configuré pour amplifier la sortie de tension en courant continu du module d'entrée de courant alternatif (1) dans un demi-cycle positif du secteur ; le module d'amplification Boost négatif (3), relié au module d'entrée de courant alternatif (1), étant configuré pour amplifier la sortie de tension en courant continu du module d'entrée de courant alternatif dans un demi-cycle négatif du secteur ; et le deuxième transistor de commutation (S2) étant configuré pour sélectionner une connexion du module d'entrée de courant alternatif (1) et de la batterie (4) au module d'amplification Boost positif (2) ou au module d'amplification Boost négatif (3) ;
**caractérisé en ce que**
un collecteur du premier transistor de commutation (S1) est relié électriquement à une cathode d'une première diode (D1) dans le module d'amplification Boost positif (2) et une extrémité d'un premier condensateur de filtre de sortie (C1) dans le module d'amplification Boost positif (2), et un émetteur du premier transistor de commutation (S1) est relié électriquement à une extrémité d'une deuxième bobine d'induction (L2) dans le module d'amplification Boost négatif (3) et une cathode de la batterie (4) ; et
une anode du premier thyristor (Q1) est reliée électriquement à l'autre extrémité de la deuxième bobine d'induction (L2) dans le module d'amplification Boost négatif (3), une cathode d'une deuxième diode (D2) dans le module d'amplification Boost négatif (3), et un émetteur d'un quatrième transistor de commutation (S4) dans le module d'amplification Boost négatif (3), et une cathode du premier thyristor (Q1) est reliée électriquement à une anode de la batterie (4).

2. Circuit selon la revendication 1, comprenant en outre :
une troisième diode, une anode de la troisième diode étant reliée électriquement à l'autre extrémité de la deuxième bobine d'induction, et une cathode de la troisième diode étant reliée à un fil neutre du secteur.

3. Circuit selon la revendication 1 ou 2, dans lequel :
au moins un transistor parmi le premier transistor de commutation, le deuxième transistor de commutation et le quatrième transistor de commutation comprend un transistor à effet de champ de puissance et un transistor à effet de champ bipolaire à grille isolée.

4. Procédé de commande du circuit selon l'une quelconque des revendications 1 à 3, comprenant les étapes suivantes :
dans un demi-cycle positif du secteur, commander un premier transistor de commutation pour l'allumer, de telle sorte qu'une deuxième bobine d'induction dans le module d'amplification Boost négatif stocke de l'énergie électrique ; et
commander le premier transistor de commutation pour l'éteindre, de telle sorte que la deuxième bobine d'induction se décharge pour charger une batterie en utilisant un premier thyristor.

5. Procédé selon la revendication 4, dans lequel la commande d'un premier transistor de commutation pour l'allumer, de telle sorte qu'une deuxième bobine d'induction dans un module d'amplification Boost négatif stocke de l'énergie électrique, comprend les étapes suivantes :
commander le premier transistor de commutation pour l'allumer, de telle sorte qu'un courant dans un premier filtre de sortie dans un circuit d'amplification Boost positif circule dans un fil neutre du secteur par le premier transistor de commutation, la deuxième bobine d'induction dans le module d'amplification Boost négatif, et un quatrième transistor de commutation dans le module d'amplification Boost négatif, et la deuxième bobine d'induction stocke de l'énergie électrique ; ou
commander le premier transistor de commutation pour l'allumer, de telle sorte qu'un courant dans un premier filtre de sortie dans un circuit d'amplification Boost positif circule dans un fil neutre du secteur par le premier transistor de commutation, la deuxième bobine d'induction dans le module d'amplification Boost négatif, et une troisième diode, et la deuxième bobine d'induction stocke de l'énergie électrique.

6. Procédé selon la revendication 4 ou 5, comprenant en outre l'étape suivante :
dans un demi-cycle négatif du secteur, commander le premier transistor de commutation pour l'éteindre.

7. Circuit d'alimentation sans coupure UPS, comprenant :
un module d'entrée de courant alternatif, un module d'amplification Boost positif, un module d'amplification Boost négatif, une batterie, un premier transistor de commutation, un deuxième transistor de commutation, et un premier thyristor ; le module d'entrée de courant alternatif étant configuré pour transformer le secteur en une tension en courant continu ; le module d'amplification Boost positif, relié au module d'entrée de courant alternatif, étant configuré pour amplifier la sortie de tension en courant continu du module d'entrée de courant alternatif dans un demi-cycle positif du secteur ; le module d'amplification Boost négatif, relié au module d'entrée de courant alternatif, étant configuré pour amplifier la sortie de tension en courant continu du module d'entrée de courant alternatif dans un demi-cycle négatif du secteur ; et le deuxième transistor de commutation étant configuré pour sélectionner une connexion du module d'entrée de courant alternatif et de la batterie au module d'amplification Boost positif ou au module d'amplification Boost négatif;
**caractérisé en ce que**
un émetteur du premier transistor de commutation est relié électriquement à une anode d'une deuxième diode dans le module d'amplification Boost négatif et une extrémité d'un deuxième condensateur de filtre de sortie dans le module d'amplification Boost négatif, et un collecteur du premier transistor de commutation est relié électriquement à une extrémité d'une première bobine d'induction dans le module d'amplification Boost positif et une anode de la batterie ; et
une anode du premier thyristor est reliée électriquement à une cathode de la batterie, et une cathode du premier thyristor est reliée électriquement à l'autre extrémité de la première bobine d'induction dans le module d'amplification Boost positif, une anode d'une première diode dans le module d'amplification Boost positif, et un collecteur d'un troisième transistor de commutation dans le module d'amplification Boost positif.

8. Circuit selon la revendication 7, comprenant en outre :
une troisième diode, une cathode de la troisième diode étant reliée électriquement à l'autre extrémité de la première bobine d'induction, et une anode de la troisième diode étant reliée à un fil neutre du secteur.

9. Circuit selon la revendication 7 ou 8, dans lequel :
au moins un transistor parmi le premier transistor de commutation, le deuxième transistor de commutation et le quatrième transistor de commutation comprend un transistor à effet de champ de puissance et un transistor à effet de champ bipolaire à grille isolée.

10. Procédé de commande du circuit selon l'une quelconque des revendications 7 à 9, comprenant les étapes suivantes :
dans un demi-cycle négatif du secteur, commander un premier transistor de commutation pour l'allumer, de telle sorte qu'une première bobine d'induction dans un module d'amplification Boost positif stocke de l'énergie électrique ; et commander le premier transistor de commutation pour l'éteindre, de telle sorte que la première bobine d'induction se décharge pour charger une batterie en utilisant un premier thyristor.

11. Procédé selon la revendication 10, dans lequel la commande d'un premier transistor de commutation pour l'allumer, de telle sorte qu'une première bobine d'induction dans un module d'amplification Boost positif stocke de l'énergie électrique, comprend les étapes suivantes :
commander le premier transistor de commutation pour l'allumer, de telle sorte qu'un courant dans un fil neutre du secteur circule dans le fil neutre du secteur par un troisième transistor de commutation dans le module d'amplification Boost positif, la première bobine d'induction dans le module d'amplification Boost positif, le premier transistor de commutation, et un deuxième condensateur de filtre de sortie dans un module d'amplification Boost négatif, et la première bobine d'induction stocke de l'énergie électrique ; ou
commander le premier transistor de commutation pour l'allumer, de telle sorte qu'un courant dans un fil neutre du secteur circule dans le fil neutre du secteur par une troisième diode, la première bobine d'induction dans le module d'amplification Boost positif, le premier transistor de commutation, et un deuxième condensateur de filtre de sortie dans un module d'amplification Boost négatif, et la première bobine d'induction stocke de l'énergie électrique.

12. Procédé selon la revendication 10 ou 11, comprenant en outre l'étape suivante :
dans un demi-cycle positif du secteur, commander le premier transistor de commutation pour l'éteindre.
